# EUROPEAN PATENT APPLICATION

(11) **EP 4 410 511 A2**
(43) Date of publication of application: **07.08.2024**
(21) Application number: 24151368.8
(22) Date of filing: 11.01.2024
(51) Int. Cl.: B29B 9/12, B29B 9/14, B29B 17/00

(54) **NATURAL FIBER PLASTIC COMPOSITE**

(30) Priority: 13.01.2023 FI 20235037
(71) Applicant: UPM-Kymmene Corporation, 00100 Helsinki (FI)
(72) Inventor: TEUBER, Laura, 00100 Helsinki (FI); LASSILA, Mikko, 00100 Helsinki (FI); HAVUMÄKI, Hanna, 00100 Helsinki (FI)
(74) Representative: Berggren Oy

(57) **Abstract**

The invention relates to a method for manufacturing a natural fiber plastic composite material (100), the method comprising: forming a basic mixture (51) comprising at least 20 wt.% (by dry weight) label stock based pulp (11) comprising thermoplastic polymer(s) and cellulose based fibers, wherein equal to or more than 90 % of the cellulose based fibers have a fiber length of less than 1.5 mm, by feeding the materials into a pre-mixer (50), and heating the materials to a processing temperature of the thermoplastic polymer(s), and forming natural fiber plastic composite material (100) comprising the basic mixture (51) by using a melt processing. The invention further relates to a natural fiber plastic composite material (100). The invention further relates to a label stock based pulp (11), and a method for producing a label stock based pulp (11).

## Description

### Technical field

The specification relates to a natural fiber plastic composite material. This specification relates to a method for making a natural fiber plastic composite material. This specification further relates to a label stock based pulp comprising cellulose based fibers, and to a method for making a label stock based pulp comprising cellulose based fibers.

### Background

Natural fiber plastic composite products typically comprise a natural fiber material and a plastic polymer. Natural fiber plastic composites can be made, for example, from sawdust and a plastic by an extrusion method. The starting materials can be fed, for example, as granulates into the extrusion process.

However, there is still a need to develop raw materials and manufacturing methods for natural fiber plastic composites.

### Summary

It is an aim of this specification to provide a natural fiber plastic composite material, and a method for manufacturing a natural fiber plastic composite material. It is further an aim of this specification to provide a label stock based pulp, and a method for making a label stock based pulp comprising cellulose based fibers.

Aspects of the invention are characterized by what is stated in the independent claims. Some preferred embodiments are disclosed in the dependent claims. These and other embodiments are disclosed in the description and figures.

Label stock based waste typically contains adhesives and release coating agent(s), such as silicone. Therefore, conventionally the reuse and recycling of the label stock based waste has been challenging. However, nowadays, recyclability and use of less virgin raw materials is valued in the production.

The natural fiber plastic composite material according to this specification can comprise
- thermoplastic polymer(s), and
- at least 20 wt.%, preferably at least 30% label stock based pulp, determined from a weigh of the natural fiber plastic composite material.

The label stock based pulp comprises cellulose based fibers, wherein equal to or more than 90 % of the cellulose based fibers have a fiber length of less than 1.5 mm. The label stock based pulp can further comprise inactivated adhesive(s) and silicone(s). Preferably, the label stock based pulp has a silicone content of more than 0 wt.% and less than 1.5 wt.%, and a lignin content of less than 1.5 wt.%, preferably less than 0.5 wt.%.

Technical effects of the natural fiber plastic composite material according to this specification include improved homogeneity of label stock based waste/polymer agglomerate, which can serve e.g., as raw material for profile extrusion. Further, technical effects include improved mechanical properties of extruded profiles based on label stock based pulp, compared to label stock based flakes.

A method for manufacturing a natural fiber plastic composite material can comprise the following steps:
- forming a basic mixture comprising:
   ▪ at least 20 wt.%, such as 20-90 wt.%, preferably 20 to 70 wt.% (by dry weight) label stock based pulp comprising thermoplastic polymer(s) and cellulose based fibers, wherein equal to or more than 90 % of the cellulose based fibers have a fiber length of less than 1.5 mm, and wherein a silicone content of the label stock based pulp is preferably more than 0 wt.% and less than 1.5 wt.%,
   ▪ optionally, inactivated adhesive(s),
   ▪ optionally, additives, and
   ▪ optionally, at least 3 wt.% (by dry weight) additional thermoplastic polymer(s),
   by feeding said materials into a pre-mixer, and heating the materials to a processing temperature of the thermoplastic polymer(s),
- optionally, adding thermoplastic polymer(s) and/or additives into the basic mixture, and
- forming the natural fiber plastic composite material by using a melt processing.

The processing temperature of the thermoplastic polymers can be selected so that at least some of the thermoplastic polymer(s) are at least partly melted. The processing temperature can be, for example, equal to or more than 160°C.

The step of forming the basic mixture can further include:
- cooling the materials while mixing, for example down to 80°C, after said heating.

In one embodiment, the method further comprises:
- adding further material(s), such as e.g., thermoplastic polymer(s) and/or additive(s) and/or label stock based pulp and/or label stock based flakes into the basic mixture, and
- further mixing the materials in a second mixer.

This embodiment can be used, e.g., to mix different material batches before forming the natural fiber plastic composite material.

The natural fiber plastic composite material can comprise particles, such as granulates. Thus, the natural fiber plastic composite material can be in a form of granulates. Said granulates can be used, e.g., for a final natural fiber plastic composite product.

The label stock based pulp can be made from a label stock based waste. A method for producing the label stock based pulp preferably includes the following step:
- pulping the label stock based waste comprising cellulose based fibers, thereby obtaining the label stock based pulp, wherein a dry matter content of the label stock based waste can be at least 70%, preferably at least 80%, and more preferably at least 85% during the pulping.

A method for producing a label stock based pulp from a label stock based waste can comprise the following steps:
- providing a label stock based waste comprising cellulose based fibers, silicone(s), and adhesive(s), the label stock based waste preferably having an average silicone content of more than 0 wt.% and less than 1.5 wt.%, and an average lignin content of less than 1.5 wt.%,
- pulping the label stock based waste so that dry matter content of the label stock based waste is at least 70% and preferably at least 80% during the pulping, thereby obtaining the label stock based pulp,

wherein at least 90 % (by dry weight) of the cellulose based fibers in the label stock based pulp have a fiber length of less than 1.5 mm, and
wherein the label stock based pulp preferably has a silicone content of more than 0 wt.% and less than 1.5 wt.%, and a lignin content of less than 1.5 wt.%, and a content of the cellulose based fibers is preferably at least 50 wt.%, more preferably at least 60 wt.% and still more preferably at least 65% (by dry weight).

Preferably, the method for producing the label stock based pulp comprises a step of chopping the label stock based waste before pulping the label stock based waste into the label stock based pulp. Technical effects include providing a more stable pulping process in order to obtain improved homogeneous of the pulped label stock based waste, and a facilitated handling and/or dosing of the label stock material into the pulping unit.

The label stock based waste, such as the chopped label stock based waste, is preferably pulped by using a dry pulping unit, preferably a whirlwind mill. Technical effects is that a dissolution step is not required (e.g., like in wastepaper recycling) and no wastewater is created. Further technical effect of the dry pulping is that wet-strength papers can be recycled by using the dry pulping unit.

The natural fiber plastic composite material can comprise a coupling agent. In this embodiment, the method includes:
- dosing a coupling agent before or during the step of forming the basic mixture.

The technical effect is to improve an adhesion between cellulose based fibers and thermoplastic polymer(s).

The natural fiber plastic composite material can further comprise label stock based flakes. Technical effects include facilitated incorporation of label waste based filler material into the material.

Thus, the method for manufacturing a natural fiber plastic composite material can further comprise:
- shredding some of the label stock based waste into label stock based flakes, and
- applying the label stock based flakes into the label stock based pulp and/or to the basic mixture before forming the natural fiber plastic composite material.

Thus, at least part of the label stock based flakes can be applied into the label stock based pulp before the pre-mixing, and/or at least part of the label stock based flakes can be applied into the formed basic mixture.

The natural fiber plastic composite material can be used for a composite product, such as a composite board, or a composite board system.

As discussed, the natural fiber plastic composite material according to this specification comprises the label stock based pulp.

The label stock based pulp can comprise
- cellulose based fibers,
- optionally, inactivated adhesives,
- thermoplastic polymer(s),
- a silicone content of less than 1.5 wt.%, preferably less than 1.2 wt.%, and
- a lignin content of less than 1.5 wt.%, preferably less than 1 wt.%.

Equal to or more than 90 % (by dry weight) of the cellulose based fibers in the label stock based pulp have a fiber length of less than 1.5 mm. Technical effect includes that the separated fibres will act as a reinforcement of the plastic rather than just a filler, which enhances mechanical properties.

The label stock based pulp typically comprises at least 50 wt.%, preferably at least 60 wt.%, (by dry weight) cellulose based fibers.

One technical effect of the novel process is to significantly reduce energy consumption and, hence, to reduce the production costs and environmental load, as label stock based waste can be used instead of virgin materials. Further, thanks to the dry pulping process, the formed pulp does not need to be dried. This can also decrease environmental load due to the decreased energy consumption. Therefore, novel solution can be environmentally friendly way to obtain cellulose based fibers for composites. The dry fiber material can be obtained without a separate drying step, and without burning the pulp during the pulping.

Preferably, at least 50% of cellulose based fibers in the label stock based pulp has a length of more than 700 µm. Further, preferably, a length weighted fibre length of the cellulose based fibers in the label stock based pulp is in a range between 870 µm and 970 µm, measured according to standard ISO 16065-2. Technical effect is that the fibers can act like reinforcement in the composite material rather than just a filler and thereby improve the mechanical properties of the polymer matrix material.

The natural fiber plastic composite material may not contain sawdust or other lignin containing material, which lignin may disintegrate due to uv-radiation, impairing the wood properties. The paper in label stock based waste is in most cases made from chemical pulp and does therefore not comprise lignin. This makes the fibre fractions of the adhesive laminate more homogenous, stable, and stronger.

Moreover, the label stock based pulp can provide improved mixability compared to label stock based flakes. Thus, at least some properties of the natural fiber plastic composite material may be substantially improved.

The natural fiber plastic composite material in accordance with the specification can be environmentally friendly and promote the principle of sustained development. Due to the novel recycling process of a label stock based waste, label stock based wastes can be used to help to minimize solid waste and to maximize the reuse of raw materials. In addition, because label stock based waste is used to replace virgin materials, the novel solution can help to minimize water pollution and air pollution. The novel solution can further be energy-efficient solution for decreasing environmental load.

The method in accordance with the specification allows the disposal of adhesive waste and production of a utilizable product. The specification discloses a product which can be made partly or totally from recycling material.

The natural fiber plastic composite material formed in the process can be utilized in various applications, e.g., for edge boards, reel cores, building materials, patio boards, design products or the like. Surprisingly, mechanical properties can be improved (compared to label stock based flakes) if the label stock based waste undergoes a dry pulping process to separate the fibres before mixing it with thermoplastics and additives e.g., in a hot-cold-mixer. Thus, label stock based waste can be used for substantially high quality products.

### Brief description of the drawings

- Fig. 1: illustrates, by way of an example, method steps according to an embodiment,
- Fig. 2: illustrates, by way of an example, method steps according to an embodiment,
- Fig. 3: illustrates, by way of an example, method steps according to an embodiment,
- Fig. 4a: illustrates, by way of an example, an Sₓ, Sy-cross-section of a composite board,
- Fig. 4b: illustrates, by way of an example, a composite board, and
- Fig. 5: show results from experimental tests.

The figures are schematic and are intended to illustrate the general principles of the disclosed solution. Therefore, the illustrations in the Figures are not necessarily in scale or suggestive of precise layout of system components.

### Detailed description

The solution is described in the following in more detail with reference to some embodiments, which shall not be regarded as limiting.

In this specification, references are made to the figures with the following numerals and denotations:
- 1: label stock based waste,
- 10: dry pulping unit,
- 11: label stock based pulp comprising cellulose based fibers,
- 15: first storage tank,
- 20: shredder for shredding a label stock based waste into label stock based flakes,
- 21: label stock based flakes,
- 25: second storage tank,
- 30: thermoplastic polymer,
- 50: pre-mixing device, pre-mixer,
- 51: basic mixture,
- 60: second mixer,
- 70: second pre-mixer,
- 71: mixture comprising label stock based flakes,
- 80: additional mixer for label stock based flakes,
- 90: means for forming a natural fiber plastic composite material,
- 100: natural fiber plastic composite material, and
- 101: natural fiber plastic composite product.

### Terms and standards

Unless otherwise indicated, the following standards refer to methods which may be used in obtaining stated values of parameters representing quality of a product:

| | |
|---|---|
| Dry matter content % | ISO 638, |
| Length weighted fiber length Lc(l) mm | ISO 16065-2, |
| Brightness from pulp | ISO 2470, |
| Ash content 525°C (pulp) | ISO 1762, and |
| Ash content 900°C (pulp) | ISO 2144. |

Unless otherwise indicated, fiber properties can be obtained by using Valmet Fiber Image Analyzer (Valmet FS5) according to the manufacturer's instructions.

Valmet Fiber Image Analyzer (Valmet FS5) is an example of a device, which can be used according to the manufacturer's instructions to perform the fiber furnish analysis. For example, automated optical analysis, such as an ultra-high resolution (UHD) camera system equipped with image analysis software, may be used to acquire a greyscale image of a sample, of which image the properties of the fibers in the sample can be determined. The greyscale image can be acquired from a sample placed in a transparent sample holder, such as a cuvette, using a 0.5 millimeter depth of focus according to ISO 16505-2 standard.

Valmet Fiber Image Analyzer (Valmet FS5) can be used to determine fiber properties, such as fiber length and fiber width, by means of automated optical analysis using unpolarized light, according to ISO 16065-2.

For the purpose of the present description and the claims, unless otherwise indicated, all ranges include any combination of the maximum and minimum points disclosed and include any intermediate ranges therein, which may or may not be specifically enumerated herein.

The embodiments and examples recited in the claims and in the description are mutually freely combinable unless otherwise explicitly stated.

In this specification, the term "comprising" may be used as an open term, but it also comprises the closed term "consisting of". Thus, unless otherwise indicated, the word "comprising" can be read as "comprising or consisting of".

Percentage values relating to an amount of a material are percentages by weight (wt.%) unless otherwise indicated. All percentage values relating to an amount of a material refer to dry weight, unless otherwise indicated.

In this specification, the term "coupling agent" refers to any material that ameliorates compatibility between cellulose based fibers and thermoplastic polymer(s).

In this specification, the term "recycled" refers to new use of material, wherein the material is recovered and provided for a new use.

### Label stock based waste

The label stock based waste 1 is quite challenging material. The label stock based waste 1 can include (recycled) adhesive laminate, face material, adhesive material, and/or release material.

In an example, the label stock based waste comprises or consists of release liner with release coating. In an example, label stock based waste comprises or consists of label matrix of face material and adhesive. In an example, the label stock based waste comprises or consists of face material with adhesive and release liner with release coating.

The face material may include thermoplastics, coating(s), filler(s) and additive(s). Furthermore, the face may be printed, dyed, pigmented or they may contain any other additional agents. The main component of face material may be thermoplastic, such as polyolefin based. In an example the face may be polypropylene (PP), polyethylene (PE) or polyethylene terephthalate (PET). Alternatively, the main component may be paper.

Release liner may have paper backing coated with release coating. Alternatively, the backing may be or plastic (film), such as PET film. Paper liners have high tension strength and thus good performance on highspeed labelling lines. Plastic liners are not only strong but have smooth texture allowing even adhesive coverage.

Release liners may comprise different kind of fillers, coatings, adhesives etc. Moreover, release liners are available in different colors. Therefore, the recovered release liner material may contain several raw materials in different colors. In addition, the recovered release liner material may comprise printing colors. Further, the recovered release liner material typically contains release coating agent(s), such as silicone.

Therefore, as labels comprises adhesive(s), and label and/or release material is typically siliconized, the label stock based waste 1 can comprise both: silicone-based agent(s), and adhesive(s). The label stock based waste 1 can comprise mainly cellulosic material, plastics, silicone-based compound(s), and adhesive material. Also, pigments, dyes, reagents or other materials or agents considered as impurities may be included.

Labels typically comprise chemical pulp due to high quality requirements of the face. Chemical pulp may also be preferred in paper liners. The label stock based waste 1 can be lignin-free, or the lignin content may be low, such as less than 1.5% (by dry weight), less than 1% (by dry weight), less than 0.5% (by dry weight) or less than 0.2% (by dry weight). Technical effect of the lignin-free or low-lignin material is to enhance the structural and mechanical properties of the manufactured composite product comprising the label stock based waste 1.

The exact composition of the label stock based wastes may vary depending on the source, but when preparing the composite products, the total composition of the label stock based waste 1 can be adjusted by combining different recycled materials to obtain a desired label stock based pulp 11.

### Dry pulping and label stock based pulp

A label stock based pulp 11 according to this specification can be obtained from the label stock based waste.

The method for producing the label stock based pulp 11 can be a dry pulping process in which a dry matter content of the label stock based waste is at least 70% during the pulping. Technical effect is to provide a more homogenous agglomerate and better mechanical properties by using a label stock based waste 1 than by using other kind of processes. Another technical effect is to enable better fiber matrix bonding.

The dry pulping process can be implemented by using a dry defibration device, such as a dry pulping unit 10. Thus, the label stock based pulp 11 can be obtained by using a dry pulping unit 10.

The method for producing a label stock based pulp 11 can comprise a step of sorting the label stock based waste before pulping at least part of the sorted label stock based waste 1 into the label stock based pulp 11. The label stock based waste can be sorted, e.g., to provide a predetermined content of cellulose based fibers and/or thermoplastic polymer(s).

The method for producing the label stock based pulp 11 can comprise a step of chopping at least part of the label stock based waste 1 into label stock based flakes 21 before pulping the label stock based waste 1 into the label stock based pulp 11. In an embodiment, coarsely chopped label stock based waste 1 is introduced into the dry pulping, in which a whirlwind mill separates the fibres into the label stock based pulp.

Thus, the label stock based waste 1 can be chopped into label stock based flakes, before pulping the label stock based waste 1. Size of the label stock based flakes 21 may range, for example, from 3 mm to 250 mm, or from 30 mm to 100 mm.

In the dry pulping process, the label stock based waste 1, such as the label stock based flakes 21, is pulped into the label stock based pulp 11. The dry pulping process can comprise a feeding device, such as a belt conveyor, for transferring the label stock based waste into the dry pulping unit 10.

In a preferred embodiment, the dry pulping unit 10 comprises a mill base, a mill cover and a rotor. The rotor(s) can comprise grinding tool(s). The dry pulping unit 10 can be, for example, a whirlwind mill. Technical effects include improved efficiency of the pulping process and/or improved quality of the dry pulped label stock based waste.

The dry pulping unit 10 can comprise heat adjusting means for adjusting the temperature of the label stock based waste during the dry pulping process.

Temperature of the label stock based waste, determined as a maximum temperature of the label stock based waste in the dry pulping unit 10, can be equal to or less than 100°C, such as in a range between 15°C and 100°C, preferably below 85°C, such as in a range between 20°C and 85°C.

The label stock based pulp 11 can be in a form of pulverized material. Thus, the label stock based pulp 11 can have separated fibers and plastic(s) in a form of fine particles. The label stock based pulp 11 can either be compacted or kept as fluffy matter.

For ease of further handling, the fluffy dry pulp can be pelletized in an additional processing step. Therefore, the label stock based pulp 11 can be formed into pellets in a pelletizing step, by using a pelletizer. Alternatively, the label stock based pulp 11 can be used in a form of a fluffy material.

Optionally, the label stock based pulp 11 can be conveyed to a first storage tank 15 and stored therein, before it is used to obtain the basic mixture 51.

Solids content of the label stock based waste 1, determined from the label stock based waste to be conveyed to the dry pulping unit 10, can be e.g., more than 70%, preferably equal to or more than 80%, for example equal to or more than 90%.

The dry pulping is substantially waterless method for producing pulp from the label stock based waste. Solids content of the label stock based waste, during the pulping, can be at least 70%, preferably at least 75%, more preferably at least 80%, still more preferably at least 85%, and still more preferably at least 90%. Technical effect is to obtain pulp having desired solids content from the label stock based waste by using a dry pulping method, without a need of a separate drying step before compounding. Another effect of the dry pulping is to kill adhesive properties of the label stock based waste, thereby forming inactivated adhesives. Technical effect of killing adhesive properties is to obtain a production of the fiber plastic composite material without breaks in the processing. Thus, the label stock based pulp 11 can comprise inactivated adhesive(s).

In an embodiment, the obtained label stock based pulp 11 comprises, for example, 50-90% (by dry weight) of cellulosic material and up to 30 wt.% thermoplastic polymer(s).

Thanks to the dry pulping, the obtained label stock based pulp 11 does not need to be dried after the pulping process. The moisture content of the label stock based pulp 11 can be less than 30%, such as equal to or less than 20%, preferably less than 10% (by dry weight), more preferably less than 8% (by dry weight), still more preferably less than 5% (by dry weight), and most preferably less than 3% (by dry weight). Technical effect is to improve properties of the formed natural fiber plastic composite material as water, if present, ameliorates adhesion. Water e.g., disturbs functioning of coupling agent(s). Further technical effect is to provide substantially homogeneous composite product.

The label stock based pulp 11 have specific fiber characteristic values that differ from fiber characteristic values of virgin pulp as well as fiber characteristic values of label stock based flakes 21. The label stock based pulp 11 having desired quality is obtained from the label stock based waste by using a dry pulping method and without a need of a separate drying step before compounding.

Equal to or more than 90 % of cellulose based fibers in the label stock based pulp 11 can have a fiber length of less than 1.5 mm. Preferably, equal to or more than 93 % of fibres have a fiber length of less than 1.5 mm. Technical effect is that fibres can be more finely distributed in the plastic than e.g., label stock based flakes 21.

Equal to or more than 50 % of fibres in the label stock based pulp 11 can have a fiber length of equal to or more than 700 µm. Preferably, equal to or more than 55 % of fibres have a fiber length of equal to or more than 700 µm. Technical effect is that the separated fibres will act as a reinforcement of the plastic, which enhances the mechanical properties.

The term "fiber fines content" refers to a percentage of fines (particles shorter than 20 µm) in the label stock based pulp 11. Fiber fines content, referring to the fibers having a fiber length of less than 0.2 mm in the label stock based pulp 11, can be equal to or less than 19%. Preferably, the fiber fines content is equal to or less than 15%, more preferably equal to or less than 10%, and most preferably equal to or less than 5%. Technical effect is to enhance the mechanical properties.

Length weighted fibre length of the label stock based pulp 11 can be in a range between 870 µm and 970 µm, preferably in a range between 890 µm and 950 µm, measured according to standard ISO 16065-2. Technical effect is to obtain more homogeneous material comprising the label stock based pulp 11, and to enhance mechanical properties compared to label stock based flakes 21.

An average fibre width of the label stock based pulp 11 can be in a range between 21.8 µm and 24.5 µm, preferably in a range between 22 µm and 24.3 µm. Technical effect is that fibres, particularly when having the length according to this specification, can work as a reinforcement for a product comprising the label stock based pulp.

In an embodiment, fibrillation of the label stock based pulp 11 can be in a range between 0.57% and 0.95%, preferably in a range between 0.67% and 0.85%.

In an embodiment, coarseness of the label stock based pulp 11 can be in a range between 0.096 mg/m and 0,122 mg/m, preferably in a range between 0.02 mg/m and 0.10 mg/m.

In an embodiment, curl level of the label stock based pulp 11 can be in a range between 9.6% and 12.3%, preferably in a range between 10% and 12%.

The label stock based pulp 11 can have a kink level in a range between 3560/m and 4360 /m, preferably in a range between 3700/m and 4200/m.

The label stock based waste can be sorted before or after the pulping, e.g., to provide predetermined properties for a natural fiber plastic composite material 100 containing the label stock based waste. In this embodiment, one or more samples can be taken and analyzed, and the results can be used for optimizing the process.

The label stock based waste can be sorted according to ash content. Ash content has an effect on properties of the obtained natural fiber plastic composite material 100 containing the label stock based waste.

Ash content (525°C) of the label stock based pulp 11 can equal to or less than 25%, such as in a range between 10% and 25%, preferably in a range between 11% and 23%, more preferably in a range between 12% and 21%, still more preferably in a range between 13% and 20%, and most preferably equal to or less than 19%.

Ash content (900°C) of the label stock based pulp 11 can equal to or less than 17%, such as in a range between 7% and 17%, preferably in a range between 8% and 16%, more preferably in a range between 9% and 15%, still more preferably in a range between 10% and 14%, and most preferably equal to or less than 13%.

The label stock based waste can be sorted for providing predetermined brightness for the label stock based pulp.

Brightness of the label stock based pulp 11 can be at least 48%, such as in a range between 48% and 80%, preferably equal to or less than 75%, and more preferably equal to less than 70%. Further, the brightness of the label stock based pulp 11 is preferably at least 50%, more preferably at least 55%, and most preferably at least 58%. Technical effect is that said brightness can be particularly suitable for some applications. In an embodiment, brightness of the label stock based pulp is in a range between 48% and 60%. In another embodiment, brightness of the label stock is in a range between 61% and 80%.

Technical effect of the label stock based pulp 11 having one or more above mentioned features includes improved homogeneity of the basic mixture, to enhance mechanical properties of the obtained composite product. When label stock based wastes are included in composite materials, the mechanical and structural properties of the final products may be weaker compared to products made from corresponding virgin materials. Surprisingly, thanks to the dry pulping method, these properties can be maintained at sufficient level for many applications. Said benefits are typically realized the better, the more of above-mentioned features are implemented in the label stock based pulp.

### Label stock based flakes

A part of the label stock based waste may be chopped e.g., by using a shredder 20, into label stock based flakes 21.

Thus, the method for manufacturing the natural fiber plastic composite material may comprise a step of shredding part of the label stock based waste into label stock based flakes.

The label stock based flakes may comprise small pieces, such as stripes. Preferably the small pieces have a length of equal to or less than 30 mm, such as 10 to 15 mm. Width of the waste label flakes can be, for example, in a range of 1-10 mm.

The label stock based flakes 21 can have a moisture content of less than 5%, more preferably less than 3%, or less than 2%.

The label stock based flakes 21 can further dry pulped into label stock based pulp, and/or at least part of the flakes 21 can be used as raw material for the basic mixture 51.

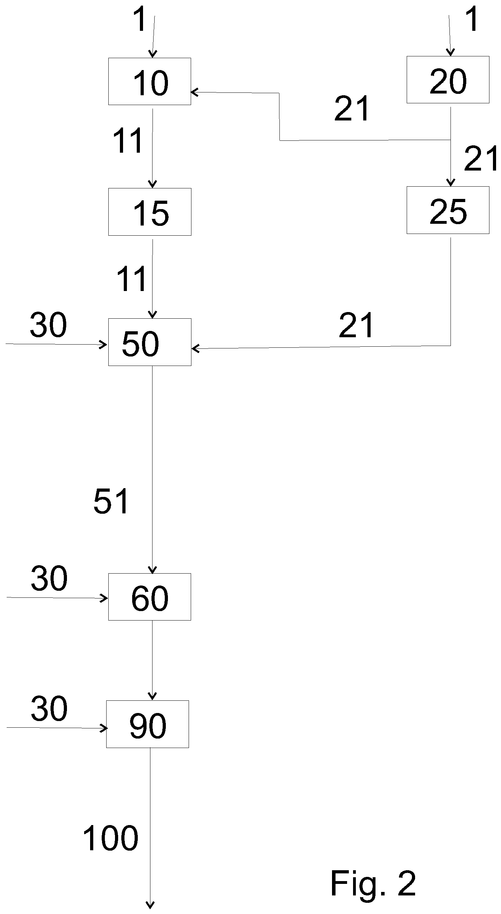

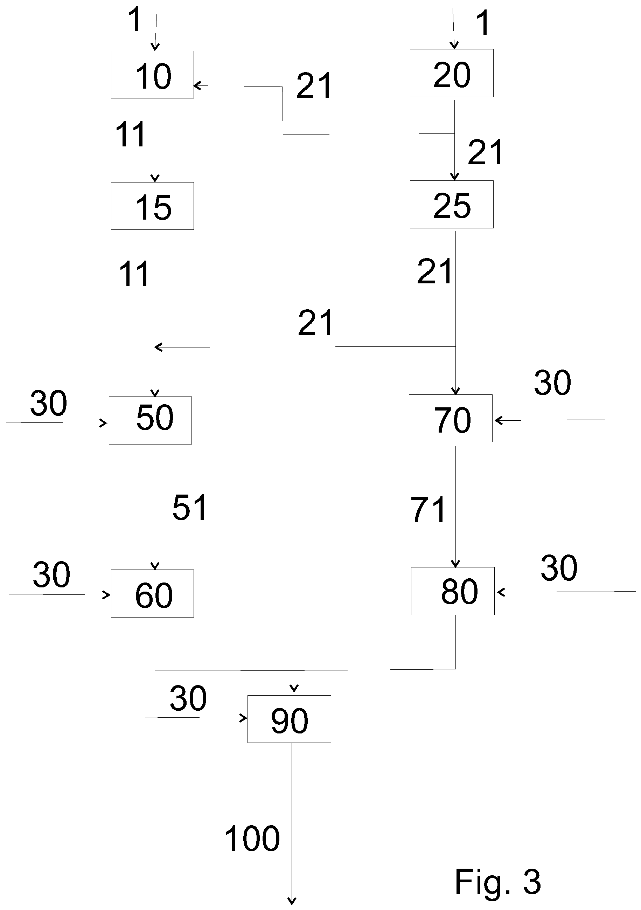

Therefore, and referring to Figs 2-3, the method for manufacturing the natural fiber plastic composite material can comprise a step of conveying at least part of the label stock based flakes 21 to the dry pulping unit 10 and/or to the pre-mixer 50.

The method for manufacturing the natural fiber plastic composite material may comprise steps of:
- pre-mixing the label stock based flakes 21 with a thermoplastic polymer 30 in a second pre-mixer 70, and
- optionally, further mixing the formed mixture in an additional mixer 80, and
- conveying at least part of the mixture to the means 90 for forming the natural fiber plastic composite material.

The label stock based flakes 21 can be stored, if needed, by using a second storage tank 25.

### Thermoplastic polymer

As discussed, the label stock based pulp typically comprises thermoplastic polymer(s). Additional thermoplastic polymer(s) can be applied e.g., in conjunction with the pre-mixing, and/or the optional second mixing, before producing the fiber plastic composite material. Technical effect is that efficiency of mixing between the label stock based pulp 11 and thermoplastic polymer 30 can be improved.

The additional thermoplastic polymer(s) 30, applied to the label stock based pulp 11 and/or to the basic mixture, can be virgin plastic. The thermoplastic polymer(s) 30 can comprise virgin and/or recycled polymer(s). For environmental reasons, in an embodiment, at least 50 wt.%, preferably at least 60 wt.% of thermoplastic polymer(s) in the natural fiber plastic composite material are recycled. A further technical effect is that, in the case of recycled polymers, the melting point may be a little bit lower than with virgin polymers.

The thermoplastic polymers mixed to the label stock based pulp and/or into the basic mixture can comprise at least one of: polyethylene, polypropylene, polymethyl pentene, polybutene-1, polyamide, polystyrene, polyethylene terephthalate (PET), polyvinyl chloride (PVC), polycarbonate, and their mixtures. Preferably, the thermoplastic polymers comprise or consist of polyolefins, such as polyethylene and/or polypropylene.

The natural fiber plastic composite material can contain thermoplastic polymer(s), for example, up to 70% (by dry weight), preferably from 25% to 60% (by dry weight), more preferably from 30% to 55% (by dry weight), and most preferably from 30% to 50% (by dry weight), including thermoplastic polymer(s) from the label stock based pulp. Technical effect is to improve an easiness of the process and to obtain improved properties of the natural fiber plastic composite material.

### Additives

The basic mixture 51 can comprise additives. Thus, the natural fiber plastic composite material 100 can comprise additives. The additives can comprise one or more from blowing agents, binders, cross-linking agents, pigments, dyes, UV protective agents, lubricants and/or other additives known by a person skilled in the art.

The content of the additives in the natural fiber plastic composite material 100 can be more than 0 wt.%, e.g., in a range of 1-10% (by dry weight), such as in a range of 1-5% (by dry weight) or 1-3% (by dry weight). The additive(s) may be added e.g., during forming the basic mixture discussed in previous and/or after the basic mixture has been formed.

The method may comprise a step of selecting additive(s) from flame retardant, hydrophobic material, pesticide, colorants, and mixtures thereof, and mixing the additive(s) with the label stock based pulp 11, or with the basic mixture 51 comprising the label stock based pulp.

The basic mixture and/or the obtained natural fiber plastic composite material can contain lubricant(s) and/or wax(es). In an embodiment, thanks to the label stock based pulp containing silicones, the need of lubricant(s) may be substantially reduced. In an embodiment, the composite does not comprise lubricants, excluding silicone(s) and/or inactivated adhesive(s) which act as lubricant(s).

The natural fiber plastic composite material 100 can comprise lubricants and waxes less than 4%, preferably less than 3%, more preferably less than 2%, still more preferably less than 1 %, and most preferably less than 0.5 %, such as less than 0.3% (by dry weight).

The natural fiber plastic composite material 100 may contain one or more coupling agent(s) for improving the adhesion between cellulose based fibers and thermoplastic polymer(s) 30. The basic mixture can comprise 0-7.5% (by dry weight) of the coupling agent(s), such as 2-5.5% (by dry weight). Depending on the type of coupling agent, the coupling agent can be present in the final product as such, or it may have reacted with the ingredient(s), such as thermoplastic polymers or fibers, covalently or non-covalently, and therefore may be integrated in the polymers or in the fibers, such as covalently bound. The coupling agent can contain moieties or components, which are reactive or compatible with thermoplastic material and moieties or components, which are reactive or compatible with the cellulosic fiber material. The natural fiber plastic composite material 100 can comprise 0-7.0% (by dry weight) of the coupling agent(s), such as 2-5% (by dry weight).

The coupling agent can be added at the step of forming the basic mixture and/or into the basic mixture before forming the natural fiber plastic composite material 100. Technical effect is to achieve an easy, quick, and useful manner of adding a coupling agent.

*Forming basic mixture comprising* label stock based pulp, and the basic mixture

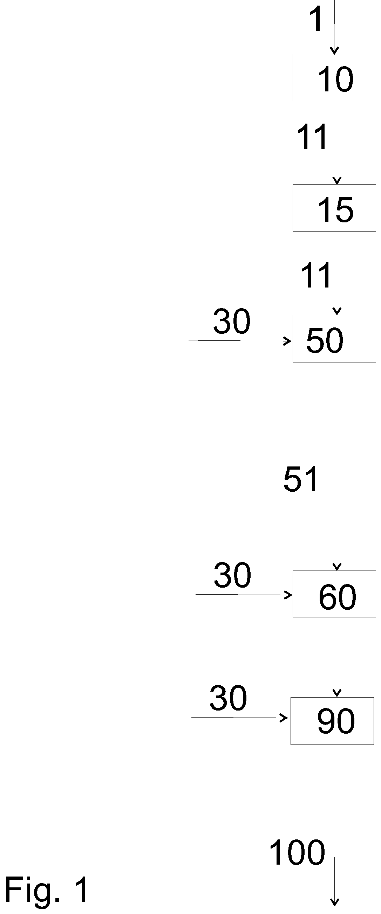

Figures 1 to 3 disclose, by way of examples, method steps according to some embodiments. The Figs further illustrate some example points for adding, for example, thermoplastic polymers.

Referring to Figs 1-3, the method for manufacturing the natural fiber plastic composite material can comprise a step of conveying at least part of the label stock based pulp 11 to a pre-mixer 50.

The label stock based pulp 11 can be compounded with polymer(s) in a form of pellets or a fluffy material. The pellets and/or the fluffy material may further comprise label stock based flakes 21.

For environmental reasons, in an embodiment, at least 80 wt.%, preferably at least 90 wt.%, and most preferably at least 98 wt.% of cellulose based fibers in the natural fiber plastic composite material 100 are recycled.

A method for manufacturing the natural fiber plastic composite material can comprise the following steps:
- forming a basic mixture 51 comprising
   ∘ at least 20 wt.% (by dry weight) label stock based pulp 11 comprising thermoplastic polymer(s) and cellulose based fibers, wherein equal to or more than 90 % of the cellulose based fibers have a fiber length of less than 1.5 mm, and
   ∘ optionally, at least 3 wt.% (by dry weight) additional thermoplastic polymer(s) 30,
   by feeding the materials into a pre-mixer 50, and heating the materials to a processing temperature of the thermoplastic polymer(s),
- pre-mixing raw materials comprising the label stock based pulp 11 in the pre-mixer 50, thereby obtaining the basic mixture 51,
- optionally, further mixing the basic mixture 51 in a second mixer 60, wherein thermoplastic polymer(s) 30, and/or additives, and/or label stock based flakes, and/or label stock based pulp 11 can be applied into the second mixer 60, and
- conveying the formed mixture to the means 90 for forming the natural fiber plastic composite, and
- forming the natural fiber plastic composite material 100 by using a melt processing.

Referring to Figs 2-3, the natural fiber plastic composite material 100 may comprise the label stock based flakes 21. At least part of the label stock based flakes 21, if used, can be conveyed to the pre-mixer 50. However, the basic mixture 51 does not need to contain the label stock based flakes 21. In an embodiment, amount of the label stock based flakes in the basic mixture 51, as well as in the natural fiber plastic composite material, is less than 10 wt.% (by dry weight).

The label stock based pulp 11 can be introduced to the pre-mixer 50 together with thermoplastic(s) and/or additives to form the basic mixture 51. The basic mixture 51 can be a base material for a natural fiber plastic composite material.

Thus, the method for manufacturing a natural fiber plastic composite material comprises a step of forming the basic mixture 51 comprising the label stock based pulp 11. The label stock based pulp 11 and additional thermoplastic polymer(s) and/or additives can be mixed into a substantially homogenous mixture during one or more mixing steps before forming the natural fiber plastic composite material.

The label stock based pulp 11 can be mixed together with one or more other materials, such as thermoplastic polymer(s) 30 and/or additives and/or label stock based flakes, in a pre-mixer 50. The pre-mixing includes heating. Preferably, the pre-mixing includes a heating stage wherein the materials are heated to a processing temperature of the thermoplastic polymers. The processing temperature is preferably equal to or more than 160°C, more preferably above 170°C, such as above 180°C. Maximum temperature during the pre-mixing depends on the raw materials and can be, e.g. equal to or less than 200°C. Technical effect is to provide adhesion between cellulose based fibers and polymer based substances. Another technical effect is that plastic can be fused at least partly so as to form agglomerates with cellulose based fibers. Further, as the label stock based waste contains cellulose based fibers, the use of temperatures above 200°C may not be desired to avoid damaging the natural fiber material.

The basic mixture 51 can be further mixed in a second mixer 60. In this step, it is also possible to add one or more other materials, such as thermoplastic polymer(s) 30 and/or additives and/or label stock based flakes. Preferably, the mixing in the second mixer 60, if used, includes a heating stage wherein the materials are heated to the processing temperature of the thermoplastic polymers, such as to equal to or more than 160°C, more preferably above 170°C, such as above 180°C, and preferably equal to or less than 200°C. The technical effect is to improve adhesion between cellulose based fibers and polymer based substances while avoiding damaging the natural fiber material.

Preferably at least 30%, more preferably at least 50%, still more preferably at least 80%, and most preferably at least 90% of the thermoplastic polymer material is in melt form during the heating stage, at least momentarily. Technical effect is that the cellulose based fibers can adhere to the thermoplastic polymer material efficiently.

The heating stage of the pre-mixing can have a mixing time from 5 to 25 minutes, preferably from 7 to 12 minutes. Technical effect is to mix the raw materials efficiently while melting the thermoplastic polymer(s) 30. Another technical effect is to provide sufficiently long dwell time. The thermoplastic polymer material is, at least partly, in melt form, when the cellulose based fibers can adhere to the thermoplastic polymer material.

The materials can be cooled after the heating stage. Thus, the method can comprise cooling the materials for example down to 90°C, preferably down to 80°C, and more preferably down to 70°C after the heating stage. In one preferred embodiment, mixing is provided also in the cooling stage and the method comprises: cooling the materials while mixing.

The above discussed mixing time, as well as the cooling step, can also be used for mixing in the second mixer 60.

It is not obligatory to use the cooling stage in all applications, i.e., the pre-mixing device and/or the second mixing device may be used without the cooling stage. However, preferably, the cooling stage follows the heating stage.

In an embodiment, the pre-mixing device 50 is a hot-cold mixer or an extruder. Technical effect is to provide sufficiently high temperature, long dwell time and large contact area.

Preferably, the pre-mixing device 50 for forming the basic mixture is the hot-cold mixer (i.e., hot-cold mixing device) comprising at least one heating stage. Technical effect is to provide a substantially powerful mixing in the heating stage. Another technical effect is to provide good adhesion between thermoplastics and cellulose based fibers.

The share of the label stock based waste in the basic mixture and/or in the natural fiber plastic composite material 100 can be at least 20 wt.%, for example between 25 wt.% and 90 wt.%, preferably more than 30 wt.% (by dry weight), for example between 35 wt.% and 80 wt.%, more preferably more than 40 wt.%, for example between 45 and 70 wt.%, and most preferably equal to or more than 50 wt.%, for example between 50 wt.% and 65 wt.%. Technical effect is to provide environmentally friendly composite product.

The basic mixture 51 and/or the natural fiber plastic composite material 100 can contain the label stock based pulp 11 from 20 wt.% to 90 wt.% (by dry weight), preferably from 25% to 80% (by dry weight), more preferably from 30% to 70% (by dry weight), and most preferably from 40% to 65% (by dry weight). Technical effect is to improve mixing and adhesion between the matrix material and the fiber material. Furthermore, due to the fine dry pulp material, flocculation of the fiber material can be at least substantially avoided. Furthermore, thanks to the dry pulp, it is possible to use inexpensive and readily available recycled materials in composite products.

A part of the label stock based waste may be provided as the label stock based flakes 21. The basic mixture may contain the label stock based flakes 21 from 0 wt.% up to 35 wt.% (by dry weight), preferably from 3% to 30% (by dry weight), more preferably from 5% to 25% (by dry weight), and most preferably from 8% to 20% (by dry weight).

In an embodiment, the basic mixture 51 and/or the natural fiber plastic composite material 100 comprises the label stock based flakes 21 less than 35 wt.% (by dry weight), preferably less than 30 wt.% (by dry weight), more preferably less than 25 wt.% (by dry weight), still more preferably less than 20 wt.%, still more preferably less than 15%, and most preferably less than 10 wt.% (by dry weight). In an embodiment, the natural fiber plastic composite material 100 does not comprise said flakes.

The label stock based pulp 11 can be used for composites. Typically, long fibers are better for providing good strength properties for a product. Surprisingly, label stock based pulp 11 having substantially small fiber length can provide sufficient strength properties for many applications and, hence, it can be used to provide, cost efficiently, environmentally friendly composite product. Furthermore, thanks to the label stock based pulp 11, at least some virgin plastic can be replaced with recycled plastic.

As discussed, the basic mixture 51 can further be mixed e.g. in a second mixer 60. In the second mixer, additional thermoplastic(s) 30 and/or additive(s) and/or label stock based flakes 21 may be mixed into the basic mixture 51.

Thanks to the label stock based pulp 11, the fiber material can be spread evenly among the plastic matrix material and the fibers can be wetted evenly with the matrix material. Further, adhesion of the fibers to the matrix material can be secured and a composite product without fiber agglomerates can be obtained.

### Forming a natural fiber plastic composite material and a natural fiber plastic composite material

Means 90 for forming the natural fiber plastic composite material can comprise an extruder, into which the mixture comprising the label stock based pulp 11 is led from the mixing. A shaping unit for forming granulates can be arranged in conjunction with the extruder.

Thus, the formed mixture can be granulated e.g., in a compounding extruder. In an embodiment, an additional thermoplastic polymer(s) 30 and/or label stock based flakes 21 and/or additive(s) are added into the means 90 for forming the natural fiber plastic composite material, such as into the compounding extruder. In one example, all materials are conveyed as a single flow to the extruder. In another example, the materials are conveyed to the extruder as two or more separate flows.

The natural fiber plastic composite material can comprise the basic mixture according to this specification. Thus, the natural fiber plastic composite material 100, such as granulates, may comprise or be formed from the basic mixture. Thanks to the label stock based pulp 11, the fiber material can be spread evenly among the plastic matrix material and the fibers can be wetted evenly with the matrix material.

The natural fiber plastic composite material can comprise at least 20 wt.% label stock based pulp 11, determined from a weigh of the natural fiber plastic composite material, wherein the label stock based pulp comprises cellulose based fibers, wherein equal to or more than 90 % of the cellulose based fibers have a fiber length of less than 1.5 mm.

The natural fiber plastic composite material can further comprise
- thermoplastic polymer(s) 30, and
- silicone(s).

In an embodiment, the natural fiber plastic composite material comprises inactivated adhesive(s).

The label stock based pulp 11 can have
- a silicone content of more than 0 wt.% and less than 1.5 wt.%, preferably in a range between 0.2 wt.% and 1.4 wt.%, more preferably in a range between 0.4 wt.% and 1.3 wt.%, and still more preferably in a range between 0.6 wt.% and 1.2 wt.%, and
- a lignin content of less than 1.5 wt.% (by dry weight), preferably less than 1 wt.%, and more preferably less than 0.5wt.% (by dry weight).

The natural fiber plastic composite material 100 can comprise, for example, 15-70% (by dry weight) thermoplastic polymer(s) 30, including thermoplastic polymers from the label stock based waste. Further, the natural fiber plastic composite material 100, can comprise, for example, at least 20%, preferably at least 30%, still more preferably at least 40%, or at least 50% (by dry weight) cellulose based fibers, including cellulose based fibers from the label stock based waste.

Mechanical properties of the composite material, such as elasticity and water absorbency, can be adjusted by changing an amount and quality of the label stock based pulp 11 and/or an amount and quality of the additional thermoplastic polymer(s), and/or an amount and quality of additive(s). Properties of the composite material can be tailored to be suitable for each product application.

Thanks to the label stock based pulp 11, cellulose based fibers can be more finely distributed in the plastic than e.g., label stock based flakes 21. Furthermore, separated fibres of the label stock based pulp 11 act as a reinforcement of the plastic, which enhances the mechanical properties.

Technical effect of the silicones and the inactivated adhesives in the label stock based pulp is to improve flow characteristics and process behavior of compounds during extruding, molding, etc. Another technical effect is to reduce viscosity, promote dispersion, shorten mixing times, and lower mixing temperatures and energy requirements.

One technical effect of the novel solution is to obtain a composite product in a cost-effective manner, which composite product can have improved strength properties compared to other processed label stock based wastes. Further, thanks to the novel method, a good, cost efficient, and environmentally friendly product can be obtained by using a recycled raw material.

Thanks to the label stock based pulp 11, mechanical properties of the natural fiber plastic composite material can be significantly improved, compared to usage of label stock based flakes 21.

Further, sawdust, if used in wood-plastic composites, is so shaped that it does not actually reinforce the product but instead functions merely as filler in the plastic matrix. Furthermore, sawdust or wood chips require drying before the actual processing, because high moisture content in the filler weakens the quality of the manufactured natural fiber plastic composite material. The water vapour which is gasified in the processing produces gas bubbles which can affect the look of the product as well as its mechanical properties. Thanks to the dry pulping process of label stock based waste, these problems are avoided or at least diminished.

### Forming a final composite product and a final composite product

The final composite product comprising the natural fiber composite material can be formed by using an extruder or an extrusion system, or by injection molding device known by a person skilled in the art. For example, in the case of the extrusion, any suitable single-screw extruder or twin-screw extruder, such as a counter-rotating twin-screw extruder or a corotating twin-screw extruder, may be used.

The natural fiber plastic composite material 100 can be used for a final composite product, such as for forming a decking board, or e.g., t-clips for a decking board system.

In general, a step of forming the final composite product can comprise forming the natural fiber plastic composite material, which is preferably in form of granulates, into a final composite product.

The final composite product can comprise at least 20 wt.%, preferably at least 30 wt.% label stock based pulp 11.

Thanks to the label stock based pulp, it is possible to obtain a composite product having high or at least sufficient flexural strength (bending strength) and flexural modulus. Flexural strength is a material property, defined as the stress in a material just before it yields in a flexure test. The flexural modulus (bending modulus) is computed as the ratio of stress to strain in flexural deformation, or the tendency for a material to resist bending.

Properties of the natural fiber plastic composite material and/or the final composite product, such as a composite board, can vary and depend e.g. on the raw materials and method steps used during the manufacturing.

In an embodiment, the flexural stress of the natural fiber plastic composite material and/or the final composite product is in the range of 28-55 MPa, preferably from 32 to 40 MPa. This can be measured according to DIN EN ISO 178 (compound) or EN 15534-1 (deck boards). In addition or alternatively, tensile stress of the of the natural fiber plastic composite material and/or the final composite product can be in the range of 15 MPa to 30 MPa, preferably from 17 MPa to 26 MPa. This can be measured according to EN 527-2. The technical effect is to provide desired stiffness and strength properties for many applications, and therefore to prevent break during handling, storing and use.

In an embodiment, tensile modulus of the natural fiber plastic composite material and/or the final composite product is in the range of 20-30 MPa*10^-2, preferably from 22 to 28 MPa*10^-2. In an embodiment, in addition, or alternatively, flexure modulus of the of the natural fiber plastic composite material and/or the final composite product is in the range of 20-30 MPa*10^-2, preferably from 22 to 28 MPa*10^-2. The technical effect is to provide desired stiffness and strength properties for many applications, and therefore to prevent break during handling, storing and use.

Moisture absorption can be determined by the weight gain relative to the dry weight of the samples during a specified time. The water adsorption of natural fiber plastic composite material and/or the final composite product (in 28 days) can be up to 15% (by dry weight), preferably less than 10%, and more preferably less than 7% (by dry weight). This can be measured according to EN 317. Technical effect is to improve long-term performance, particularly relating to mechanical properties.

The final product may be a building element, such as a decking board, other floor element or a façade panel, or a landscaping element. If the final product is a board, furniture, window frames and door frames can be obtained from the boards. In an example, the board is a railing, a fence, or a noise barrier. The board may also be a product that is used to cover the surface of another product, such as a cover strip. The board may be an outdoor element. In one embodiment the board is a decking board.

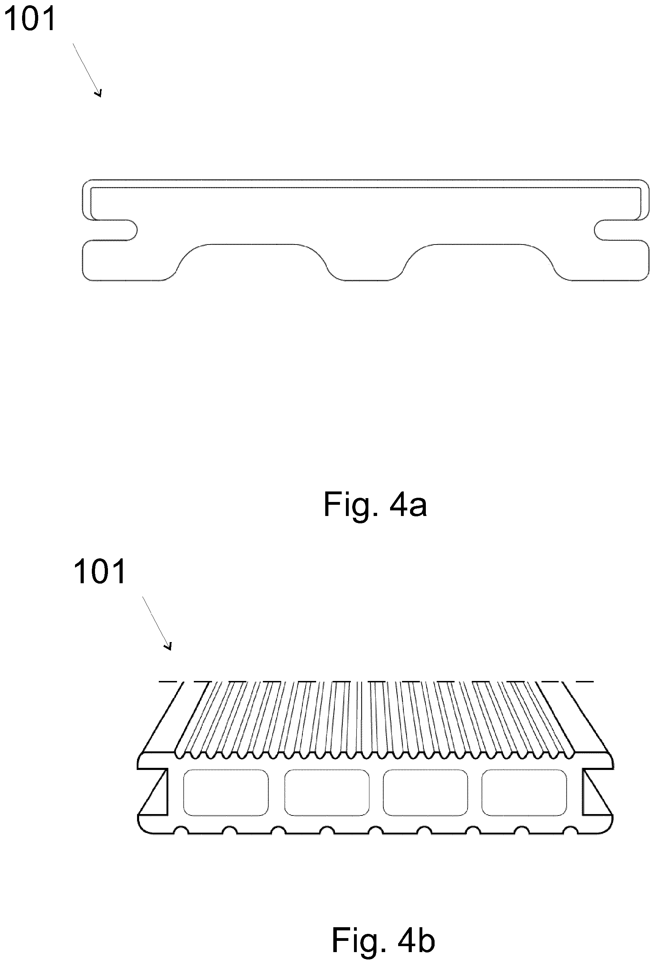

Thus, and referring to Figs 4a-b, the composite products may be provided as elongated boards having a composite body. Especially in elongated composite products, such as composite boards, it is desired to obtain a certain stiffness, hardness and tensile or flexural properties of the product to avoid bending and wearing during storing, handling and use. Thanks to the novel method, sufficient mechanical properties can be obtained with environmentally friendly raw materials.

### Experimental tests

### Example 1: Dry pulping

Different types of self-adhesive label stock waste including so called start-up waste, matrix waste, coating and trimming waste, were processed via dry pulping method according to this specification. A turbo mill was used for dry pulping the different waste materials.

Each of the label stock based waste types was processed at for different speeds of the dry pulping aggregate, by using frequencies from 80 Hz to 110 Hz.

Surprisingly, there was no overall clear effect of speed on the different fibre characteristics among the label stock based waste types. Thus, it was possible to use any kind of tested speed to obtain the label stock based pulp. The lower the speed, the higher the fines content and the fibrillation. Further, with increased speed, the difference in fines content becomes more obvious and the difference in fibrillation becomes less obvious between the waste types.

The pulp fibres were characterized by using FS5 methods and a microscopy.

The following fibre characteristics values were measured:
- Min. 90 % of fibres were <1.5 mm in length,
- Min. 50 % of fibres were >700 µm in length,
- Fibre fines content was <19%,
- Length weighted fibre length was from 870 to 970 µm,
- Fibre width was from 21,8 to 24,5 µm,
- Fibrillation was from 0.57 to 0.95 %,
- Coarseness was 0.096 - 0.122 mg/m,
- Curl level was 9.6 to 12.3 %, and
- Kink level was 3562 to 4358 /m.

Further, plastic particles having a size from some micrometers to millimeters were included in the label stock based pulp.

### Example 2: Mixing and forming a composite product

The label stock based pulp obtained according to example 1 was mixed with plastic to form a basic mixture.

Amount of the label stock based pulp varied between test points being up to 60% (by dry weight), amount of thermoplastic polymers, such as post-consumer recycled HDPE, varied from 40 to 70% (by dry weight) and a coupling agent was present, depending on a test point, from 0 to 5% (by dry weight).

The selected ingredients were combined and mixed for each test point.

During the experimental tests, it was possible to mix the label stock based pulp with the plastic to form a basic mixture for composite products.

Finally, the formed mixtures were extruded or injection molded into composite products.

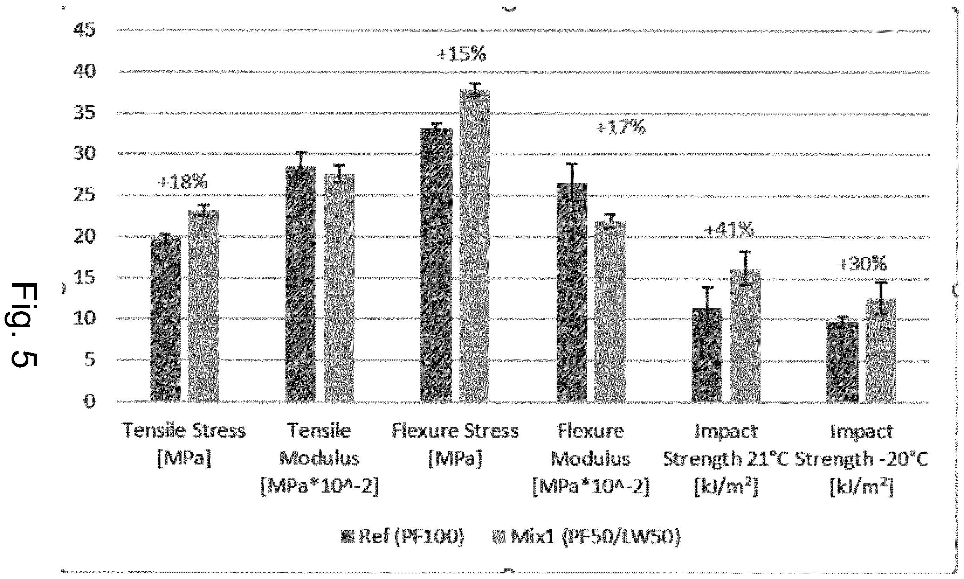

Products obtained by injection molding were tested. Some effects of label stock based pulp are presented in Figure 5.

In Fig. 5, "PF" with a number refers to wt.% of label stock based flakes 21, determined of total amount of label stock based waste, and "LW50" refers to wt.% of label stock based pulp 11, determined of total amount of the label stock based waste.

Surprisingly, the use of label stock based pulp enhanced the mechanical properties of the products, compared to a use of label stock based flakes 21.

The invention has been described with the aid of illustrations and examples. The invention is not limited solely to the above presented embodiments but may be modified within the scope of the appended claims.

## Claims

1. A method for manufacturing a natural fiber plastic composite material (100), the method comprising:
- forming a basic mixture (51) comprising
▪ at least 20 wt.% (by dry weight) label stock based pulp (11) comprising thermoplastic polymer(s) and cellulose based fibers, wherein equal to or more than 90 % of the cellulose based fibers have a fiber length of less than 1.5 mm,
▪ optionally, inactivated adhesive(s), and
▪ preferably, at least 3 wt.% (by dry weight) additional thermoplastic polymer(s) (30),
by feeding the materials into a pre-mixer (50), and heating the materials to a processing temperature of the thermoplastic polymer(s), and
- forming natural fiber plastic composite material (100) comprising the basic mixture (51) by using a melt processing.

2. The method according to claim 1, wherein the method comprises:
- optionally, chopping a label stock based waste (1) before pulping the label stock based waste (1) into the label stock based pulp (11), and
- pulping the label stock based waste (1) before forming the basic mixture, thereby obtaining the label stock based pulp (11), wherein a dry matter content of the label stock based waste (1) is at least 70% during the pulping.

3. The method according to any of the preceding claims, wherein the method comprises:
- optionally, dosing thermoplastic polymer(s) (30) and/or additive(s) into the basic mixture, and
- further mixing the basic mixture in a second mixer (60).

4. The method according to any of the preceding claims, wherein the step of forming the natural fiber plastic composite material (100) comprises:
- extruding the basic mixture into granulates in a compounding extruder.

5. The method according to any of the preceding claims, wherein the method further comprises:
- shredding some of a/the label stock based waste into label stock based flakes (21), and
- applying the label stock based flakes (21) to the label stock based pulp (11) and/or to the basic mixture (51).

6. A natural fiber plastic composite material obtainable according to the method of any of the preceding claims 1 to 5.

7. A natural fiber plastic composite material, the natural fiber plastic composite material comprising at least 20 wt.% label stock based pulp (11) determined from a total weigh of the natural fiber plastic composite material (100), wherein the label stock based pulp comprises
- cellulose based fibers, wherein equal to or more than 90 % of the cellulose based fibers have a fiber length of less than 1.5 mm, and
- thermoplastic polymer(s) (30).

8. The method or the natural fiber plastic composite material according to any of the preceding claims, wherein the label stock based pulp (11) has
- a silicone content of more than 0 wt.% and less than 1.5 wt.%, and/or
- a lignin content of less than 1.5 wt.% (by dry weight), preferably less than 0.5 wt.% (by dry weight).

9. The method or the natural fiber plastic composite material according to any of the preceding claims, wherein the natural fiber plastic composite material (100) is in a form of particles, such as granulates.

10. A method for producing a label stock based pulp (11), wherein the method comprises
- providing label stock based waste (1) comprising cellulose based fibers, the label stock based waste (1) optionally having a silicone content of more than 0 wt.%,
- optionally, chopping the label stock based waste (1) before feeding the label stock based waste (1) to a pulping unit (10),
- pulping the label stock based waste (1) so that dry matter content of the label stock based waste (1) is at least 70%, preferably at least 80% during the pulping, thereby obtaining the label stock based pulp (11), wherein the obtained label stock based pulp has a dry matter content of at least 70%, wherein at least 90 % (by dry weight) of the cellulose based fibers in the label stock based pulp have a fiber length of less than 1.5 mm.

11. A label stock based pulp comprising cellulose based fibers, wherein
- the label stock based pulp has a dry matter content of at least 70%,
- at least 90 % (by dry weight) of the cellulose based fibers in the label stock based pulp have a fiber length of less than 1.5 mm, and
- optionally, a silicone content of the label stock based pulp is less than 1.5 wt.%, and/or a lignin content of the label stock based pulp is less than 1.5 wt.%.

12. The method for producing a label stock based pulp, or the method of manufacturing a natural fiber plastic composite, or the natural fiber plastic composite material, or the label stock based pulp according to any of the preceding claims, wherein at least 50% of cellulose based fibers has a length of more than 700 µm.

13. The method for producing a label stock based pulp, or the method of manufacturing a natural fiber plastic composite, or the natural fiber plastic composite material, or the label stock based pulp according to any of the preceding claims, wherein the label stock based pulp (11) comprises at least 50 wt.% (by dry weight) cellulose based fibres.

14. The method for producing a label stock based pulp, or the method of manufacturing a natural fiber plastic composite, or the natural fiber plastic composite material, or the label stock based pulp according to any of the preceding claims, wherein a length weighted fibre length of the cellulose based fibers is in a range between 870 µm and 970 µm, measured according to standard ISO 16065-2.

15. A natural fiber plastic composite product, such as a composite board, or a part of a composite board system, wherein the natural fiber plastic composite product comprises the natural fiber plastic composite material (100) according to any of the preceding claims 6 to 14.

16. A use of a label stock based pulp in a natural fiber plastic composite product, wherein the label stock based pulp comprises cellulose based fibers, wherein equal to or more than 90 % of the cellulose based fibers have a fiber length of less than 1.5 mm.
